# FASCICULE DE BREVET EUROPEEN

(11) **EP 3 630 681 B1**
(45) Date de publication et mention de la délivrance du brevet: **16.03.2022**
(21) Numéro de dépôt: 18724573.3
(22) Date de dépôt: 18.05.2018
(51) Int. Cl.: C01B 39/54, B01J 35/04, B01J 37/02, B01D 53/94, B01J 29/85, C01B 37/08

(54) **SYNTHESE DIRECTE D'UN MATERIAU SAPO DE STRUCTURE AFX COMPRENANT DU CUIVRE ET UTILISATION DE CE MATERIAU**
DIREKTSYNTHESE EINES SAPO-MATERIALS MIT AFX-STRUKTUR MIT KUPFER UND VERWENDUNG DIESES MATERIALS
DIRECT SYNTHESIS OF A SAPO MATERIAL WITH AFX STRUCTURE COMPRISING COPPER AND USE OF THIS MATERIAL

(30) Priorité: 31.05.2017 FR 1754797
(43) Date de publication de la demande: 08.04.2020
(73) Titulaire: IFP Energies nouvelles, 92500 Rueil-Malmaison (FR)
(72) Inventeur: BERTHOUT, David, 69670 VAUGNERAY (FR); HARBUZARU, Bogdan, 69360 SIMANDRES (FR); LLIDO, Eric, 69360 COMMUNAY (FR)
(74) Mandataire: IFP Energies nouvelles
(86) Numéro de dépôt international: PCT/EP2018/063205
(87) Numéro de publication internationale: WO 2018/219700

(56) Documents cités:
- CN-B- 104 743 574
- JP-A- 2014 148 441
- US-B2- 9 517 942
- LI JIAYING ET AL: "Synthesis of NH3-SCR Catalyst SAPO-56 with Different Aluminum Sources", PROCEDIA ENGINEERING, vol. 121, 2015, pages 967-974, XP029288838, ISSN: 1877-7058, DOI: 10.1016/J.PROENG.2015.09.064
- ALESSANDRO TURRINA ET AL: "Understanding the structure directing action of copper-polyamine complexes in the direct synthesis of Cu-SAPO-34 and Cu-SAPO-18 catalysts for the selective catalytic reduction of NO with NH3", MICROPOROUS AND MESOPOROUS MATERIALS, vol. 215, 1 octobre 2015 (2015-10-01), pages 154-167, XP055268586, AMSTERDAM, NL ISSN: 1387-1811, DOI: 10.1016/j.micromeso.2015.05.038
- Li Hao ET AL: "A novel dual-template method for synthesis of SAPO-44 zeolite", RSC Advances, vol. 6, no. 42, 1 January 2016 (2016-01-01), pages 35910-35913, XP055840396, DOI: 10.1039/C6RA01622G Retrieved from the Internet: URL:https://pubs.rsc.org/i-yage/content/ar ticlepdf/2016/ra/c6ra01622g>

## Description

### DOMAINE TECHNIQUE DE L'INVENTION

L'invention a pour objet un procédé de préparation d'un matériau zéolithique silico-aluminophosphate (SAPO) de structure AFX, ainsi que l'utilisation de ce matériau, en particulier pour la réduction sélective catalytique des NOx en présence d'un réducteur en particulier sur les moteur Diesel ou à allumage commandé.

### ART ANTÉRIEUR

Les zéolithes échangées avec des métaux de transitions sont utilisées comme catalyseurs pour les applications de réduction catalytique sélective à l'ammoniac, désignées par l'acronyme anglo-saxon « SCR » pour « Selective Catalytic Réduction » (NH₃-SCR), dans les transports. Les zéolithes à petit pores, en particulier les chabazites échangées au cuivre, sont particulièrement adaptées. Elles existent commercialement sous la forme silico-aluminophosphate Cu-SAPO-34, alumino-siliciques Cu-SSZ-13 (ou Cu-SSZ-62). Leur tenue hydrothermale et efficacité de conversion des NOx, en particulier à basse température, en font les références actuelles.

L'utilisation des zéolithes de type structural AFX pour les applications NH₃-SCR est connue, mais peu de travaux évaluent l'efficacité de catalyseurs mettant en œuvre cette zéolithe.

Fickel et al. (Fickel, D. W., & Lobo, R. F. (2009), The Journal of Physical Chemistry C, 114(3), 1633-1640) étudie l'utilisation d'une SSZ-16 (type structural AFX) échangée au cuivre pour l'élimination des NOx. Cette zéolithe est synthétisée conformément au brevet US 5,194,235, dans lequel le Cu est introduit par échange en utilisant du sulfate de cuivre(II) à 80°C pendant 1h. Des résultats récents (Fickel, D. W., D'Addio, E., Lauterbach, J. A., & Lobo, R. F. (2011), 102(3), 441-448) montrent une excellente conversion et une bonne tenue hydrothermale pour un chargement à 3,78% poids en cuivre.

Des travaux sur la synthèse de zéolithes de type structural AFX ont été effectués avec différents agents structuraux (Lobo, R. F., Zones, S. I., & Medrud, R. C. (1996), Chemistry of materials, 8(10), 2409-2411) ainsi que des travaux d'optimisation de la synthèse (Hrabanek, P., Zikanova, A., Supinkova, T., Drahokoupil, J., Fila, V., Lhotka, M., Bernauer, B. (2016), Microporous and Mesoporous Materials, 228, 107-115).

Wang et al. (Wang, D. et al., CrystEngComm., (2016), 18(6), 1000-1008) ont étudié le remplacement de l'agent structurant TMHD par un mélange TEA-TMA pour la formation de SAPO-56 et obtiennent des phases non désirées SAPO-34 et SAPO-20. L'incorporation de métaux de transition n'est pas abordée.

US2016/0137518 décrit la synthèse d'une zéolithe AFX quasi-pure échangée avec un métal de transition et son utilisation pour des applications NH₃-SCR. Aucune forme particulière de zéolithe AFX n'est évoquée, cependant les matériaux formés sont de type silice-alumine et non silico-aluminophosphates.

Le document JP 2014-148441 décrit la synthèse d'une zéolithe AFX, en particulier d'une SAPO-56 comprenant du cuivre utilisable pour la réduction des NOₓ. La zéolithe AFX est synthétisée, puis ajoutée à un mélange comprenant un alcool et un sel de cuivre, le tout étant calciné. Le cuivre est donc ajouté une fois la zéolithe SAPO de type structural AFX formée. Cette zéolithe semble présenter une résistance accrue à la présence d'eau.

WO 2017/080722 présente une synthèse directe d'une zéolithe comprenant du cuivre. Cette synthèse impose de partir d'une zéolithe de type structural FAU et d'utiliser un agent complexant TEPA et un élément M(OH)ₓ pour aboutir à différents types de zéolithes, principalement de type CHA. Des zéolithes de type ANA, ABW, PHI et GME sont également produites.

La demanderesse a découvert un procédé de synthèse directe d'un matériau SAPO comprenant du cuivre de type structural AFX, présentant des performances intéressantes pour la conversion des NOₓ, notamment supérieures à celles obtenues avec des zéolithes SAPO de type structurale AFX échangées au cuivre.

Un avantage du procédé selon l'invention est d'obtenir, grâce à un ensemble de conditions opératoires spécifiques, un matériau SAPO de type structural AFX pur, c'est-à-dire sans qu'aucune autre phase cristalline ou amorphe ne soit observée par diffraction de rayons X (DRX).

### OBJET ET INTÉRÊT DE L'INVENTION

Le procédé de synthèse directe selon l'invention permet d'obtenir un matériau SAPO de type structural AFX comprenant du cuivre présentant des propriétés améliorées par rapport aux catalyseurs de l'art antérieur tout en simplifiant la synthèse classique. En particulier, l'utilisation du catalyseur préparé selon l'invention permet d'obtenir une meilleure conversion dans la réaction de conversion des NOₓ en diminuant la quantité de NO₂ produite.

### DESCRIPTION DÉTAILLÉE DE L'INVENTION

L'invention concerne un procédé de préparation d'un matériau SAPO de type structural AFX contenant du cuivre et comprenant au moins les étapes suivantes :
a) le mélange, en milieu aqueux, d'au moins une source d'aluminium, d'au moins une source de silicium, d'au moins une source de cuivre, d'au moins une source de phosphore, d'un agent complexant TETA et d'un agent structurant TMHD pour obtenir un gel de composition molaire :
   *a* SiO₂ : *b* Al₂O₃ : c P₂O₅: *d* TMHD : e CuSO₄ : *f* TETA : *g* H₂O *a*/*c* étant compris entre 0,1 et 1, b/c étant compris entre 0,1 et 1, g/c étant compris entre 1 et 100, d/c étant compris entre 0,5 et 4, e/c étant compris entre 0,005 et 0,1 et f/e étant compris entre 1 et 1,5 ;
b) le traitement hydrothermal dudit gel à une température comprise entre 170 et 220°C, sous pression de réaction autogène, pendant une durée comprise entre 1 et 3 jours avec un taux de cisaillement inférieur à 50 s⁻¹ pour obtenir la cristallisation dudit matériau SAPO de type structural AFX comprenant du cuivre.

### Etape a) de mélange

Le procédé de préparation selon l'invention comprend une étape a) de mélange, en milieu aqueux, d'au moins une source d'aluminium, d'au moins une source de silicium, d'au moins une source de cuivre, d'au moins une source de phosphore, d'un agent complexant TETA et d'un agent structurant TMHD pour obtenir un gel de formule :
*a* SiO₂ : *b* Al₂O₃ : c P₂O₅ : *d* TMHD : e CuSO₄ : *f* TETA : *g* H₂O *a*/*c* étant compris entre 0,1 et 1, b/c étant compris entre 0,1 et 1, g/c étant compris entre 1 et 100, d/c étant compris entre 0,5 et 4, e/c étant compris entre 0,005 et 0,1 et f/e étant compris entre 1 et 1,5.

De manière préférée, a/c est compris entre 0,2 et 0,9, de manière plus préférée entre 0,4 à 0,8. De manière préférée b/c est compris 0,4 et 0,9, de manière plus préférée de 0,6 à 0,8. De manière préférée, *g*/*c* est compris entre 10 et 70, de manière plus préférée entre 30 et 50. De manière préférée, d/c est compris entre 1 et 2,5. De manière préférée, e/c est compris entre 0,01 et 0,09, de manière plus préférée de 0,02 à 0,08.

La source d'aluminium peut être toute source d'aluminium connue de l'Homme du métier. En particulier, la source d'aluminium est de préférence de l'aluminate de sodium ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudo-boehmite, de l'alumine gamma ou du trihydrate alpha ou beta, une zéolithe alumino-silicique comme par exemple les USY (Ultrastable Y, de type structural FAU). On peut également utiliser des mélanges des sources citées ci-dessus.

La source de silicium peut être toute source de silicium connue de l'Homme du métier. En particulier, la source de silicium est de préférence de la silice en poudre, de l'acide silicique, de la silice colloïdale, de la silice dissoute ou du tetraethoxysilane (TEOS) ou une zéolithe alumino-silicique comme par exemple les USY (Ultrastable Y, de type structural FAU). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le CAB-O-SIL M5.

La source de cuivre est au moins une espèce apte à libérer le cuivre en solution sous forme réactive comme par exemple les sulfates, nitrates, chlorures, oxalates, complexes organométalliques de cuivre mais aussi des mélanges des sources citées ci-dessus. De préférence la source de cuivre est choisie parmi les sulfates et nitrates.

La source de phosphore peut-être choisie parmi les acides à base de phosphore comme par exemple l'acide phosphorique ou l'acide phosphoreux, les phosphates organique comme par exemple le triéthyl-phosphate. La source de phosphore peut-être aussi un aluminophosphate. De préférence la source de phosphore est l'acide phosphorique (H₃PO₄).

L'agent structurant est le N, N, N', N' tétraméthyl hexane-1,6 diamine (TMHD). Cet agent structurant permet l'obtention d'un matériau SAPO de type structural AFX.

L'agent complexant utilisé dans l'étape a) du procédé selon l'invention est le triéthylènetétramine (TETA). La demanderesse a découvert que l'utilisation spécifique de TETA en association avec les autres paramètres du procédé selon l'invention, en particulier un faible taux de cisaillement, inférieur à 50 s⁻¹, permettait d'obtenir un matériau SAPO de type structural AFX comprenant du cuivre sans présence d'autres phases cristallines ou amorphes observables par DRX, présentant en outre des propriétés améliorées par rapport à un matériau préparé par d'autres méthodes de synthèses.

Le mélange de l'étape a) est avantageusement réalisé à froid, au moins pour l'ajout de la source d'aluminium et/ou de phosphore de manière à limiter l'élévation de température due à l'exothermie de dilution et permettre une dissolution homogène des constituants. De manière avantageuse, l'ajout de la source d'aluminium et/ou de phosphore est réalisée dans un bain d'eau glacé ou tout équipement permettant l'évacuation de chaleur de manière équivalente et adaptée au volume du mélange réalisé.

### Etape b) de traitement hydrothermal

Le procédé de préparation selon l'invention comprend une étape b) de traitement hydrothermal dudit gel à une température comprise entre 170 et 220°C, sous pression de réaction autogène, pendant une durée comprise entre 1 et 3 jours avec un taux de cisaillement inférieur à 50 s⁻¹ pour obtenir la cristallisation dudit matériau SAPO de type structural AFX comprenant du cuivre.

Conformément à l'étape b) du procédé selon l'invention, le gel obtenu à l'issue de l'étape a) de mélange est soumis à un traitement hydrothermal, réalisé à une température comprise entre 170 et 220°C, de préférence entre 190 et 210°C, sous pression de réaction autogène, pendant une durée comprise entre 1 et 3 jours de préférence entre 1 et 2 jours, pour obtenir la cristallisation de ladite zéolithe SAPO de type structural AFX. A la fin du traitement hydrothermale, le solide obtenu est filtré, lavé et ensuite séché pour obtenir ladite zéolithe SAPO de type structural AFX sous forme de poudre.

Le gel est avantageusement mis sous conditions hydrothermales sous une pression de réaction autogène, en ajoutant du gaz, par exemple de l'azote.

L'étape b) du procédé de préparation selon l'invention s'effectue avec un taux de cisaillement inférieur à 50 s⁻¹, donc compris entre 0 et 50 s⁻¹. Un taux de cisaillement de 0 s⁻¹ correspond à un mode statique, c'est-à-dire en l'absence d'agitation. Dans un mode préféré, l'étape b) du procédé de préparation selon l'invention s'effectue en mode statique. Dans un autre mode préféré, l'étape b) du procédé de préparation selon l'invention s'effectue avec un taux de cisaillement compris entre 0,1 et 50 s⁻¹, par exemple avec une vis d'Archimède. La demanderesse a en effet découvert que l'utilisation d'un mode statique ou avec un très faible cisaillement en association avec les autres paramètres du procédé selon l'invention, en particulier l'utilisation d'un agent complexant TETA, permettait d'obtenir un matériau SAPO de type structural AFX comprenant du cuivre sans présence d'autres phases cristallines ou amorphes observables par DRX, présentant en outre des propriétés améliorées par rapport à un matériau préparé par d'autres méthodes de synthèses.

A l'issue de l'étape b), le matériau SAPO de type structural AFX comprenant du cuivre sans présence d'autres phases cristallines ou amorphes observables par DRX est obtenu. Son diffractogramme de rayons X correspond à la fiche ICDD (International Center for Diffraction Data) numéro : 04-013-1370.

### Etape c) de traitement thermique

Le procédé de préparation selon l'invention comprend avantageusement une étape c) de traitement thermique réalisée à l'issue de l'étape b) comprenant un traitement sous gaz inerte sec, avantageusement de l'azote, à une température comprise entre 400 et 600°C, préférentiellement entre 500 et 600°C pendant une durée comprise entre 5 et 15 h, préférentiellement entre 6 et 10 h, suivi d'un traitement par combustion sous air sec, à une température comprise entre 400 et 600°C, préférentiellement entre 500 et 600°C pendant une durée comprise entre 5 et 15 h, préférentiellement entre 6 et 10 h, le débit d'air sec étant de manière préférée compris entre 0,5 et 1,5 1/h/g de solide à traiter, préférentiellement compris entre 0,7 et 1,2 1/g/h.

Le premier traitement sous gaz inerte permet en particulier un thermo-craquage des molécules organiques avant de libérer la porosité lors du traitement par combustion. En particulier, ledit traitement sous gaz inerte permet de maintenir l'intégrité de la structure du matériau préparé par le procédé selon l'invention lors du traitement par combustion.

Á l'issue de ladite étape avantageuse c), le matériau préparé selon l'invention peut être utilisé comme catalyseur, adsorbant, support de catalyseur ou toute autre application connue de l'Homme du métier pour un matériau SAPO de type structural AFX comprenant du cuivre.

Le matériau obtenu se présente sous forme de poudre de couleur bleue claire dont l'intensité dépend de la quantité de cuivre contenue et son diffractogramme de rayons X correspond à une SAPO de type structural AFX, telle que définie par l'International Zeolite Association (IZA). La quantité de cuivre contenue dans ledit matériau peut varier de 0,5 à 8% massique de la masse totale du matériau sous sa forme anhydre.

### Etape d) d'échange

Le procédé de préparation selon l'invention comprend avantageusement, à l'issue de l'étape b) du procédé selon l'invention, ou de l'étape c) du procédé selon l'invention si elle est mise en œuvre, une étape d'échange ionique comprenant la mise en contact du solide obtenu à l'issue de l'étape b), avantageusement à l'issue de l'étape c), avec une solution comprenant une espèce apte à libérer le cuivre en solution sous forme réactive, choisie parmi les sulfates, nitrates, chlorures, oxalates, complexes organométalliques de cuivre et leurs mélanges, sous agitation à température ambiante pendant une durée comprise entre 1 h et 2 j, avantageusement pendant une durée comprise entre 0,5 et 1,5 j, la concentration en ladite espèce apte à libérer le cuivre dans ladite solution étant fonction de la quantité de cuivre que l'on souhaite incorporer audit solide. La quantité de cuivre contenue dans ledit solide est au final comprise entre 0,5 à 8% massique par rapport à la masse totale du solide sous sa forme anhydre.

La demanderesse a découvert que le matériau obtenu par le procédé selon l'invention présente des caractéristiques différentes des matériaux SAPO de type structural AFX comprenant du cuivre connus jusqu'à présent. En particulier, le matériau obtenu par le procédé selon l'invention présente des propriétés améliorées pour la conversion des NOₓ. L'invention concerne donc également un matériaux SAPO de type structural AFX comprenant du cuivre obtenu par le procédé selon l'invention, comprenant au moins les étapes suivantes :
a) le mélange, en milieu aqueux, d'au moins une source d'aluminium, d'au moins une source de silicium, d'au moins une source de cuivre, d'au moins une source de phosphore, d'un agent complexant TETA et d'un agent structurant TMHD pour obtenir un gel de formule :

   *a* SiO₂ : *b* Al₂O₃ : c P₂O₅ : *d* TMHD : e CuSO₄ : *f* TETA : *g* H₂O

   *a*/*c* étant compris entre 0,1 et 1, b/c étant compris entre 0,1 et 1, g/c étant compris entre 1 et 100, d/c étant compris entre 0,5 et 4, e/c étant compris entre 0,005 et 0,1 et f/e étant compris entre 1 et 1,5 ;
b) le traitement hydrothermal dudit gel à une température comprise entre 170 et 220°C, sous pression de réaction autogène, pendant une durée comprise entre 1 et 3 jours avec un taux de cisaillement inférieur à 50 s⁻¹ pour obtenir la cristallisation dudit matériau SAPO de type structural AFX comprenant du cuivre.

### Caractérisation du catalyseur préparé selon l'invention

Le matériau préparé selon l'invention a une structure AFX selon la classification de l'International Zeolite Association (IZA). Cette structure est caractérisée par diffraction aux rayons X (DRX).

Le diagramme de diffraction aux rayons X (DRX) est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. La comparaison du diffractogramme avec les fiches de la base de données d'ICDD (International Centre for Diffraction Data) en utilisant un logiciel comme par exemple le DIFFRACT.SUITE nous permet aussi de faire l'identification des phases cristallines présentes dans le matériau obtenu.

L'analyse qualitative et quantitative des espèces chimiques présentes dans les matériaux obtenus est faite par spectrométrie de fluorescence des rayons X (FX). Celle-ci est une technique d'analyse chimique utilisant une propriété physique de la matière, la fluorescence de rayons X. Le spectre des rayons X émis par la matière est caractéristique de la composition de l'échantillon, en analysant ce spectre, on peut en déduire la composition élémentaire, c'est-à-dire les concentrations massiques en éléments.

La perte au feu d'un échantillon, désignée sous l'acronyme PAF, est calculée par la différence de masse de l'échantillon avant et après calcination à 550°C pendant 2 h. Elle est exprimée en % correspondant au pourcentage de perte de masse.

### Utilisation du catalyseur préparé selon l'invention

L'invention concerne également l'utilisation du matériau préparé par le procédé selon l'invention, avantageusement mis en forme par dépôt sous forme de revêtement (« washcoat » selon la terminologie anglo-saxonne) sur une structure nid d'abeilles, filtrante ou non, pour la réduction sélective de NOₓ par un réducteur tel que NH₃ ou H₂. Ladite structure nid d'abeilles ainsi revêtue constitue un pain catalytique. Ladite structure peut être composée de cordiérite, carbure de silicium (SiC), titanate d'aluminium (AlTi) ou tout autre matériau dont la porosité est comprise entre 30 et 70%. La quantité de matériau préparé par le procédé selon l'invention déposé sur ladite structure est comprise entre 40 à 140 g/l pour les structures filtrantes et entre 120 et 200 g/l pour les structures avec canaux ouverts.

Le revêtement proprement dit (« washcoat ») comprend le matériau SAPO de type structural AFX comprenant du cuivre préparé selon l'invention, avantageusement associé à un liant tel que la cerine, l'oxyde de zirconium, l'alumine, la silice-alumine non zéolithique, l'oxyde de titane, un oxyde mixte de type cerine-zircone, un oxyde de tungstène. Ledit revêtement est avantageusement une solution ou une suspension. Il est appliqué à ladite structure de toute manière connue de l'Homme du métier.

Ladite structure peut être revêtue d'une ou plusieurs couches. Le revêtement comprenant le matériau SAPO de type structural AFX comprenant du cuivre préparé selon l'invention est avantageusement associé à, c'est-à-dire recouvre un ou est recouvert par, un autre revêtement présentant des capacités de réduction des NOx ou favorisant l'oxydation de polluants, en particulier celle de l'ammoniac.

Ladite structure revêtue par le matériau préparé par le procédé selon l'invention est avantageusement intégrée dans une ligne d'échappement d'un moteur à combustion interne fonctionnant principalement en mélange pauvre, c'est-à-dire en excès d'air par rapport à la stœchiométrie de la réaction de combustion comme c'est le cas pour les moteurs Diesel par exemple. Dans ces conditions de fonctionnement du moteur, les gaz d'échappement contiennent les polluants suivants : des suies, des hydrocarbures imbrulés (HC), du monoxyde de carbone (CO), des oxydes d'azotes (NOx). En amont de ladite structure peut être placé un catalyseur d'oxydation dont la fonction est d'oxyder les HC et le CO ainsi qu'un filtre pour éliminer les suies des gaz d'échappement, la fonction de ladite structure étant d'éliminer le NOx, sa gamme de fonctionnement de se situant entre 100 et 900°C et de manière préférée entre 200°C et 500°C.

### Descriptions des figures

La figure 1 présente une image obtenue par microscopie électronique à balayage (MEB) du matériau Cu-SAPO de type structural AFX obtenu par le procédé selon l'invention.
La figure 2 présente les résultats de conversion des NOx, les courbes Ex 1, Ex 4, Ex 7 et Ex 8 correspondant respectivement aux tests réalisés avec les matériaux préparés selon l'exemple 1, l'exemple 4, l'exemple 7 et l'exemple 8. A l'abscisse 400°C, les courbes correspondent, respectivement, de bas en haut à Ex 1, Ex 8, Ex 4 et Ex 7.

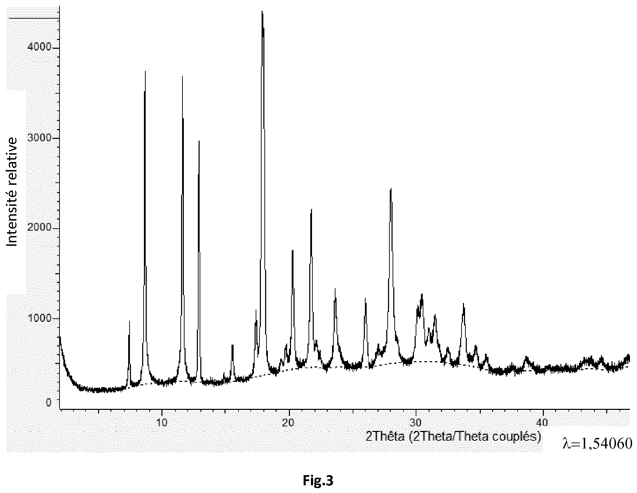

La figure 3 présente un diffractogramme de rayons X du matériau Cu-SAPO obtenu selon l'exemple 7.

### EXEMPLES

### Exemple 1 (non-conforme)

*Dans cet exemple, une zéolithe SAPO-56 échangée au Cu est synthétisée selon l'art antérieur. Dans cet exemple, le cuivre est introduit par échange ionique.*

### Etape de mélange

131,33 g d'acide phosphorique et 62,30 g d'alumine (pseudo-boehmite Pural SB3) sont mélangés à froid dans 213,80 g d'eau. Ce mélange est maintenu dans un bain d'eau glacée et dispersé sous vive agitation. On complète le mélange avec 125,80 g d'eau permutée en agitant jusqu'à homogénéisation. 20,39 g de silice pyrogénée, puis 197,17 g de structurant TMHD sont ajoutés sous agitation vive à température ambiante jusqu'à homogénéisation de la suspension.

Le mélange réactionnel présente la composition molaire suivante : 0,6 SiO₂ : 0,8 Al₂O₃ : 1,0 P₂O₅ : 2 TMHD : 40 H₂O

### Etape de traitement hydrothermal

Le gel obtenu est laissé en autoclave à une température de 200°C pendant 4 jours sans agitation. Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est une zéolithe SAPO-56 de type structural AFX brute de synthèse et pure (fiche ICDD, PDF 04-03-1370).

### Etape de traitement thermique

La zéolithe SAPO-56 brute de synthèse est traitée sous flux de N₂ sec à 550°C pendant 8 h, puis calcinée sous flux d'air sec à 550°C durant 8 h. La perte au feu (PAF) est de 21% poids.

### Echange ionique au Cu sur la SAPO-56 calciné

La zéolithe SAPO-56 calcinée est mise en contact d'une solution de [Cu(NH₃)_{4]}(NO₃)₂ pendant 1 journée sous agitation à température ambiante. Le solide final est séparé, lavé et séché. Une analyse DRX montre que le produit obtenu est une zéolithe SAPO-56 de type structural AFX brute de synthèse et pure (fiche ICDD, PDF 04-03-1370).

L'analyse chimique par fluorescence des rayons X (FX) donné un rapport molaire Si/Al et Cu/Al de 0,21 et respectivement 0,10.

### Exemple 2 (non-conforme)

*Dans cet exemple, on tente de synthétiser une zéolithe SAPO-56 avec incorporation directe du Cu en utilisant un agent complexant Tetraéthylènepentamine (TEPA) et une cristallisation sous faible cisaillement.*

### Etape de mélange

13,73 g d'acide phosphorique et 6,54 g d'alumine (pseudo-boehmite Pural SB3) sont mélangés à froid dans 30,33 g d'eau. Ce mélange est maintenu dans un bain d'eau glacée et dispersé sous vive agitation. 2,14 g de silice pyrogénée sont ajoutés à température ambiante. 0,89 g de sulfate de cuivre sont dissous dans 5,01 g d'eau permutée sous agitation pendant 5 minutes, puis on ajoute 0,69 g de TEPA et 20,70 g de structurant TMHD sous agitation vive à température ambiante jusqu'à homogénéisation de la suspension.

Le mélange réactionnel présente la composition molaire suivante : 0,6 SiO₂ : 0,8 Al₂O₃ : 1,0 P₂O₅ : 2 TMHD : 0,06 CuSO₄ : 0,06 TEPA : 40 H₂O

### Etape de traitement hydrothermal

Le gel obtenu est séparé en 4 échantillons laissés en autoclave à une température de 200°C pendant respectivement 1, 2, 3 et 4 jours sous agitation avec un taux de cisaillement de 40 s⁻¹. Les cristaux obtenus sont séparés et lavés avec de l'eau permutée jusqu'à obtention d'un pH des eaux de lavage inférieur à 8. Le matériau lavé est séché.

Les analyses DRX montre que le produit obtenu après 1, 2, 3 et 4 jours d'autoclavage est une zéolithe SAPO-56 (fiche ICDD, PDF 04-03-1370) à environ 85% massique, en mélange avec la zéolithe SAPO-34 (fiche ICDD, PDF 00-047-0429) à environ 15% massique.

On ne parvient pas dans cet exemple à synthétiser un matériau SAPO comprenant du cuivre de type structural AFX pur.

### Exemple 3 (non-conforme)

*Dans cet exemple, on tente de synthétiser une zéolithe SAPO-56 avec incorporation directe du Cu en utilisant un agent complexant Tetraéthylènepentamine (TEPA) et une cristallisation sous fort cisaillement.*

L'étape de mélange est effectuée de manière identique à l'exemple 2.

### Etape de traitement hydrothermal

Le gel obtenu est laissé en autoclave à une température de 200°C pendant 4 jours sous agitation avec un fort cisaillement (supérieur à 1000 s⁻¹). Les cristaux obtenus sont séparés et lavés avec de l'eau permutée jusqu'à obtention d'un pH des eaux de lavage inférieur à 8. Le matériau lavé est séché.

Une analyse DRX nous indique la présence d'un mélange de SAPO-17 (fiche ICDD, PDF 00-047-0621) et SAPO-34 (fiche ICDD, PDF 00-047-0429). On observe que la SAPO-56 n'es pas obtenue dans ces conditions de synthèse.

### Exemple 4 (conforme)

*Dans cet exemple, on synthétise une zéolithe SAPO-56 avec incorporation directe du Cu en utilisant un agent complexant Triéthylènetétramine (TETA) et une cristallisation sous faible cisaillement.*

### Etape de mélange

13,74 g d'acide phosphorique et 6,55 g d'alumine (pseudo-boehmite Pural SB3) sont mélangés à froid dans 30,38 g d'eau. Ce mélange est maintenu dans un bain d'eau glacée et dispersé sous vive agitation. 2,15 g de silice pyrogénée sont ajoutés à température ambiante. 0,90 g de sulfate de cuivre sont dissous dans 5,02 g d'eau permutée sous agitation pendant 5 minutes, puis on ajoute 0,52 g de TETA et 20,74 g de structurant TMHD sous agitation vive à température ambiante jusqu'à homogénéisation de la suspension.

Le mélange réactionnel présente la composition molaire suivante : 0,6 SiO₂ : 0,8 Al₂O₃ : 1,0 P₂O₅ : 2 TMHD : 0,06 CuSO₄ : 0,06 TETA : 40 H₂O

### Etape de traitement hydrothermal

Le gel obtenu est séparé en 2 échantillons laissés en autoclave à une température de 200°C pendant respectivement 1 et 2 jours sous agitation avec un taux de cisaillement de 40 s⁻¹. Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est une zéolithe Cu-SAPO-56 (fiche ICDD, PDF 04-03-1370) pure de type structural AFX, que l'étape de traitement hydrothermal ait duré un ou deux jours.

### Etape de traitement thermique

Un échantillon est traité sous flux de N₂ sec à 550°C pendant 8 h, puis calcinée sous flux d'air sec à 550°C durant 8 h.

Une analyse DRX montre que le produit obtenu est une zéolithe pure de type structural AFX.

L'analyse chimique par fluorescence des rayons X (FX) donné un rapport molaire Si/Al et Cu/Al de 0,21 et respectivement 0,11.

### Exemple 5 (non conforme)

*Dans cet exemple, on tente de synthétiser une zéolithe SAPO-56 avec incorporation directe du Cu en utilisant un agent complexant Triéthylènetétramine (TETA) et une cristallisation sous fort cisaillement.*

L'étape de mélange est effectuée de manière identique à l'exemple 4.

### Etape de traitement hydrothermal

Le gel obtenu est laissé en autoclave à une température de 200°C pendant 3 jours sous agitation avec un fort cisaillement (taux de cisaillement supérieur à 1000 s⁻¹). Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est un mélange de zéolithes SAPO-56 (fiche ICDD, PDF 04-03-1370) et SAPO-20 (fiche ICDD, PDF 00-045-0510).

### Exemple 6 (non conforme)

*Dans cet exemple, on tente de synthétiser une zéolithe Cu-SAPO-56 avec incorporation directe du Cu en utilisant un agent complexant Triéthylènetétramine (TETA), une cristallisation sous fort cisaillement et un temps de cristallisation plus court que dans l'exemple 5.*

L'étape de mélange est effectuée de manière identique à l'exemple 4.

### Etape de traitement hydrothermal

Le gel obtenu est laissé en autoclave à une température de 200°C pendant 1 jour sous agitation avec un fort cisaillement (taux de cisaillement supérieur à 1000 s⁻¹). Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu avec cristallisation sous fort cisaillement est un mélange de zéolithes SAPO-56 (fiche ICDD, PDF 04-03-1370) et SAPO-17 (fiche ICDD, PDF 00-047-0621).

### Exemple 7 (conforme)

*Cet exemple se différencie de l'exemple 4 par une composition différente du gel obtenu à l'issue de l'étape de mélange.*

### Etape de mélange

13,56 g d'acide phosphorique et 6,47 g d'alumine (pseudo-boehmite Pural SB3) sont mélangés à froid dans 29,14 g d'eau. Ce mélange est maintenu dans un bain d'eau glacée et dispersé sous vive agitation. 2,82 g de silice pyrogénée sont ajoutés à température ambiante. 1,17 g de sulfate de cuivre sont dissous dans 5,70 g d'eau permutée sous agitation pendant 5 minutes, puis on ajoute 0,69 g de TETA et 20,47 g de structurant TMHD sous agitation vive à température ambiante jusqu'à homogénéisation de la suspension.

Le mélange réactionnel présente la composition molaire suivante : 0,8 SiO₂ : 0,8 Al₂O₃ : 1,0 P₂O₅ : 2 TMHD : 0,08 CuSO₄ : 0,08 TETA : 40 H₂O

### Etape de traitement hydrothermal

Le gel obtenu est séparé en plusieurs échantillons laissés en autoclave à une température de 200°C pendant une durée de 1 à 2 jours sous agitation avec un faible cisaillement (taux de cisaillement de 40 s⁻¹). Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est une zéolithe Cu-SAPO-56 (fiche ICDD, PDF 00-047-0621) pure, pour toutes les durées de l'étape de traitement hydrothermal comprises entre un et deux jours.

### Etape de traitement thermique

Un échantillon est traité sous flux de N₂ sec à 550°C pendant 8 h, puis calcinée sous flux d'air sec à 550°C durant 8 h.

Une analyse DRX montre que le produit obtenu est une zéolithe pure de type structural AFX.

L'analyse chimique par fluorescence des rayons X (FX) donné un rapport Si/Al et Cu/Al de 0,25 et respectivement 0,13.

### Exemple 8 (conforme)

*Cet exemple se différencie de l'exemple 4 par une composition différente du gel obtenu à l'issue de l'étape de mélange.*

### Etape de mélange

13,93 g d'acide phosphorique et 6,64 g d'alumine (pseudo-boehmite Pural SB3) sont mélangés à froid dans 30,08 g d'eau. Ce mélange est maintenu dans un bain d'eau glacée et dispersé sous vive agitation. 1,45 g de silice pyrogénée sont ajoutés à température ambiante. 0,60 g de sulfate de cuivre sont dissous dans 5,92 g d'eau permutée sous agitation pendant 5 minutes, puis on ajoute 0,35 g de TETA et 21,03 g de structurant TMHD sous agitation vive à température ambiante jusqu'à homogénéisation de la suspension.

Le mélange réactionnel présente la composition molaire suivante : 0,4 SiO₂ : 0,8 Al₂O₃ : 1,0 P₂O₅ : 2 TMHD : 0,04 CuSO₄ : 0,04 TETA : 40 H₂O

### Etape de traitement hydrothermal

Le gel obtenu est séparé en plusieurs échantillons laissés en autoclave à une température de 200°C pendant une durée de 1 à 2 jours sous agitation avec un faible cisaillement (taux de cisaillement de 40 s⁻¹). Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est une zéolithe Cu-SAPO-56 (fiche ICDD, PDF 00-047-0621) pure, pour toutes les durées de l'étape de traitement hydrothermal comprises entre un et deux jours.

### Etape de traitement thermique

Un échantillon est traité sous flux de N₂ sec à 550°C pendant 8 h, puis calcinée sous flux d'air sec à 550°C durant 8 h.

Une analyse DRX montre que le produit obtenu est une zéolithe pure de type structural AFX.

L'analyse chimique par fluorescence des rayons X (FX) donné un rapport Si/Al et Cu/Al de 0,17 et respectivement 0,08.

### Exemple 9 (conforme)

*Dans cet exemple, on tente de synthétiser une zéolithe SAPO-56 avec incorporation directe du Cu en utilisant un agent complexant Triéthylènetétramine (TETA) et une cristallisation sans agitation.*

Toutes les étapes sont effectuée de manière identique à l'exemple 4 mais le traitement hydrothermal est effectuée sans agitation.

Une analyse DRX montre que le produit obtenu est une zéolithe pure de type structural AFX.

L'analyse chimique par fluorescence des rayons X (FX) donné un rapport molaire Si/Al et Cu/Al de 0,21 et respectivement 0,11.

### Exemple 10 (conforme)

*Dans cet exemple, on synthétise une zéolithe SAPO-56 avec incorporation directe du Cu en utilisant un agent complexant Triéthylènetétramine (TETA) et une cristallisation sous faible cisaillement. Une quantité supplémentaire de Cu est introduite par échange ionique.*

### Etape de mélange

13,74 g d'acide phosphorique et 6,55 g d'alumine (pseudo-boehmite Pural SB3) sont mélangés à froid dans 30,38 g d'eau. Ce mélange est maintenu dans un bain d'eau glacée et dispersé sous vive agitation. 2,15 g de silice pyrogénée sont ajoutés à température ambiante. 0,36 g de sulfate de cuivre sont dissous dans 5,02 g d'eau permutée sous agitation pendant 5 minutes, puis on ajoute 0,21 g de TETA et 20,74 g de structurant TMHD sous agitation vive à température ambiante jusqu'à homogénéisation de la suspension.

Le mélange réactionnel présente la composition molaire suivante : 0,6 SiO₂ : 0,8 Al₂O₃ : 1,0 P₂O₅ : 2 TMHD : 0,024 CuSO₄ : 0,024 TETA : 40 H₂O

### Etape de traitement hydrothermal

Le gel obtenu est séparé en 2 échantillons laissés en autoclave à une température de 200°C pendant respectivement 1 et 2 jours sous agitation avec un taux de cisaillement de 40 s⁻¹. Les cristaux obtenus sont séparés et lavés avec de l'eau permutée jusqu'à obtention d'un pH des eaux de lavage inférieur à 8. Le matériau lavé est séché.

Une analyse DRX montre que le produit obtenu est une zéolithe SAPO-56 (fiche ICDD, PDF 00-047-0621) pure de type structural AFX, que l'étape de traitement hydrothermal ait duré un ou deux jours.

### Etape de traitement thermique

Un échantillon est traité sous flux de N₂ sec à 550°C pendant 8 h, puis calcinée sous flux d'air sec à 550°C durant 8 h.

Une analyse DRX montre que le produit obtenu est une zéolithe pure de type structural AFX.

L'analyse chimique par fluorescence des rayons X (FX) donné un rapport molaire Si/Al et Cu/Al de 0,21 et respectivement 0,04.

### Echange ionique au Cu sur la Cu-SAPO-56 calciné

La zéolithe Cu-SAPO-56 calcinée obtenue dans cet exemple est mise en contact d'une solution de [Cu(NH₃)₄](NO₃)₂ pendant 1 journée sous agitation à température ambiante. Le solide final est séparé et séché.

Une analyse DRX montre que le produit obtenu est une zéolithe SAPO-56 (fiche ICDD, PDF 00-047-0621) pure.

L'analyse chimique par fluorescence des rayons X (FX) donné un rapport molaire Si/Al et Cu/Al de 0,21 et respectivement 0,11.

### Exemple 11

Afin d'évaluer l'activité en conversion des NOₓ des différents matériaux préparés, on réalise un test catalytique de réduction des oxydes d'azote (NOₓ) par l'ammoniac (NH₃) en présence d'oxygène (O₂) à différentes températures de fonctionnement. Le matériau non-conforme préparé selon l'exemple 1 est comparé aux matériaux conformes préparés selon les exemples 4, 7 et 8.

Pour chaque test, 200 mg de matériau sous forme de poudre est disposé dans un réacteur en quartz. 145 1/h d'une charge représentative d'un mélange de gaz d'échappement d'un moteur Diesel sont alimentés dans le réacteur.

Cette charge présente la composition molaire suivante :

| | |
|---|---|
| O₂ | 8,5% |
| CO₂ | 9% |
| NO | 400 ppm |
| NH₃ | 400 ppm |
| H₂O | 10% |
| N2 | qpc |

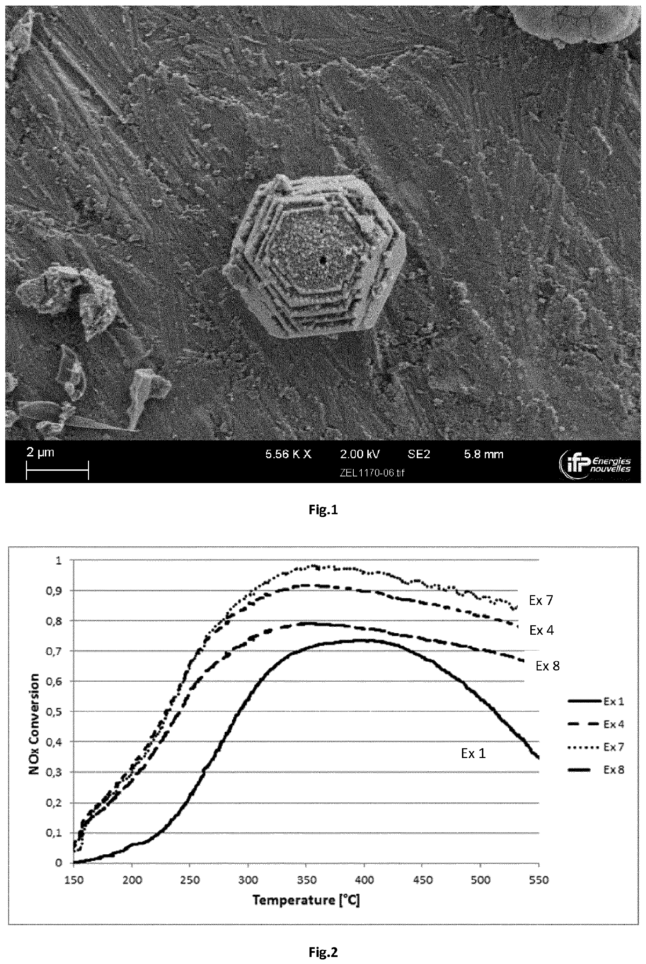

Les résultats de conversion sont présentés sur la figure 2, les courbes Ex 1, Ex 4, Ex 7 et Ex 8 correspondant respectivement aux tests réalisés avec les matériaux préparés selon l'exemple 1, l'exemple 4, l'exemple 7 et l'exemple 8.

On observe que les matériaux préparés selon l'invention présentent une meilleure conversion des NOₓ que le matériau préparé selon l'exemple 1, et ce pour toutes les températures testées.

## Revendications

1. Procédé de préparation d'un matériau SAPO de type structural AFX comprenant du cuivre et comprenant au moins les étapes suivantes :
a) le mélange, en milieu aqueux, d'au moins une source d'aluminium, d'au moins une source de silicium, d'au moins une source de cuivre, d'au moins une source de phosphore, d'un agent complexant triéthylènetétramine TETA et d'un agent structurant N,N,N',N'-tétraméthyl hexane-1,6 diamine TMHD pour obtenir un gel de composition molaire :
*a* SiO₂ : b Al₂O₃ : c P₂O₅ : *d* TMHD : e CuSO₄ : *f* TETA : g H₂O *a*/*c* étant compris entre 0,1 et 1, b/c étant compris entre 0,1 et 1, g/c étant compris entre 1 et 100, d/c étant compris entre 0,5 et 4, e/c étant compris entre 0,005 et 0,1 et f/e étant compris entre 1 et 1,5 ;
b) le traitement hydrothermal dudit gel à une température comprise entre 170 et 220°C, sous pression de réaction autogène, pendant une durée comprise entre 1 et 3 jours avec un taux de cisaillement inférieur à 50 s⁻¹ pour obtenir la cristallisation dudit matériau SAPO de type structural AFX comprenant du cuivre.

2. Procédé selon la revendication précédente dans lequel ladite étape b) est réalisée à une température comprise entre 190 et 210°C.

3. Procédé selon l'une des revendications précédentes dans laquelle ladite étape b) est réalisée pendant une durée comprise entre 1 et 2 jours.

4. Procédé selon l'une des revendications précédentes dans lequel ladite étape b) s'effectue en l'absence d'agitation.

5. Procédé selon l'une des revendications 1 à 3 dans lequel ladite étape b) s'effectue avec un taux de cisaillement compris entre 0,1 et 50 s⁻¹.

6. Procédé selon l'une des revendications précédentes comprenant une étape c) de traitement thermique réalisée à l'issue de l'étape b) comprenant un traitement sous gaz inerte sec, à une température comprise entre 400 et 600°C, pendant une durée comprise entre 5 et 15 h, suivi d'un traitement par combustion sous air sec, à une température comprise entre 400 et 600°C, pendant une durée comprise entre 5 et 15 h.

7. Procédé selon la revendication précédente dans lequel le débit d'air sec dudit traitement par combustion est compris entre 0,5 et 1,5 1/h/g de solide à traiter.

8. Procédé selon l'une des revendications 1 à 6 comprenant une étape d'échange ionique comprenant la mise en contact du solide obtenu à l'issue de l'étape b) avec une solution comprenant une espèce apte à libérer le cuivre en solution sous forme réactive choisie parmi les sulfates, nitrates, chlorures, oxalates, complexes organométalliques de cuivre et leurs mélanges, sous agitation à température ambiante pendant une durée comprise entre 1 h et 2 j, avantageusement pendant une durée comprise entre 0,5 et 1,5 j.

9. Procédé selon l'une des revendications 6 à 7 comprenant une étape d'échange ionique comprenant la mise en contact du solide obtenu à l'issue de l'étape c) avec une solution comprenant une espèce apte à libérer le cuivre en solution sous forme réactive choisie parmi les sulfates, nitrates, chlorures, oxalates, complexes organométalliques de cuivre et leurs mélanges, sous agitation à température ambiante pendant une durée comprise entre 1 h et 2 j, avantageusement pendant une durée comprise entre 0,5 et 1,5 j.

10. Matériau SAPO de type structural AFX comprenant du cuivre obtenu par le procédé selon l'une des revendications 1 à 9.

11. Utilisation du matériau SAPO de type structural AFX comprenant du cuivre préparé selon l'une des revendications 1 à 9 pour la réduction sélective de NOₓ par un réducteur tel que NH₃ ou H₂.

12. Utilisation selon la revendication précédente dans laquelle ledit matériau est mis en forme par dépôt sous forme de revêtement sur une structure nid d'abeilles.

13. Utilisation selon la revendication précédente dans laquelle ledit revêtement comprend ledit matériau associé à un liant tel que la cerine, l'oxyde de zirconium, l'alumine, la silice-alumine non zéolithique, l'oxyde de titane, un oxyde mixte de type cerine-zircone, un oxyde de tungstène.

14. Utilisation selon l'une des revendications 12 à 13 dans laquelle ladite structure revêtue par ledit matériau est intégrée dans une ligne d'échappement d'un moteur à combustion interne.

## Patentansprüche

1. Verfahren zur Herstellung eines kupferhaltigen SAPO-Materials vom AFX-Strukturtyp, das mindestens die folgenden Schritte umfasst:
a) Mischen von mindestens einer Aluminiumquelle, mindestens einer Siliciumquelle, mindestens einer Kupferquelle, mindestens einer Phosphorquelle, dem Komplexbildner Triethylentetramin TETA und dem Strukturbildner N,N,N',N'-Tetramethylhexan-1,6-diamin TMHD zum Erhalt eines Gels mit der molaren Zusammensetzung:
*a* SiO₂ : *b* Al₂O₃ : c P₂O₅ : d TMHD : e CuSO₄ : f TETA : g H₂O wobei a/c zwischen 0,1 und 1 liegt, b/c zwischen 0,1 und 1 liegt, g/c zwischen 1 und 100 liegt, d/c zwischen 0,5 und 4 liegt, e/c zwischen 0,005 und 0,1 liegt und f/e zwischen 1 und 1,5 liegt;
b) hydrothermales Behandeln des Gels bei einer Temperatur zwischen 170 und 220 °C unter autogenem Reaktionsdruck über einen Zeitraum zwischen 1 und 3 Tagen mit einer Scherrate von weniger als 50 s⁻¹ zum Erhalt der Kristallisation des kupferhaltigen SAPO-Materials vom AFX-Strukturtyp.

2. Verfahren nach dem vorhergehenden Anspruch, wobei der Schritt b) bei einer Temperatur zwischen 190 und 210 °C durchgeführt wird.

3. Verfahren nach einem der vorhergehenden Ansprüche, wobei der Schritt b) über einen Zeitraum zwischen 1 und 2 Tagen durchgeführt wird.

4. Verfahren nach einem der vorhergehenden Ansprüche, wobei der Schritt b) ohne Rühren durchgeführt wird.

5. Verfahren nach einem der Ansprüche 1 bis 3, wobei der Schritt b) mit einer Scherrate zwischen 0,1 und 50 s⁻¹ durchgeführt wird.

6. Verfahren nach einem der vorhergehenden Ansprüche, umfassend einen am Ende von Schritt b) durchgeführten Wärmebehandlungsschritt c), umfassend eine Behandlung unter trockenem Inertgas bei einer Temperatur zwischen 400 und 600 °C über einen Zeitraum zwischen 5 und 15 h gefolgt von einer Verbrennungsbehandlung an trockener Luft bei einer Temperatur zwischen 400 und 600 °C über einen Zeitraum zwischen 5 und 15 h.

7. Verfahren nach dem vorhergehenden Anspruch, wobei der Durchsatz von trockener Luft bei der Verbrennungsbehandlung zwischen 0,5 und 1,5 1/h/g des zu behandelnden Feststoffs liegt.

8. Verfahren nach einem der Ansprüche 1 bis 6, umfassend einen Ionenaustauschschritt, umfassend das Inkontaktbringen des am Ende von Schritt b) erhaltenen Feststoffs mit einer Lösung, die eine Spezies, die zur Freisetzung von Kupfer in Lösung in reaktiver Form befähigt ist und aus Sulfaten, Nitraten, Chloriden, Oxalaten, metallorganischen Komplexen von Kupfer und Mischungen davon ausgewählt ist, unter Rühren bei Umgebungstemperatur über einen Zeitraum zwischen 1 h und 2 d, vorteilhafterweise über einen Zeitraum zwischen 0,5 und 1,5 d.

9. Verfahren nach einem der Ansprüche 6 bis 7, umfassend einen Ionenaustauschschritt, umfassend das Inkontaktbringen des am Ende von Schritt c) erhaltenen Feststoffs mit einer Lösung, die eine Spezies, die zur Freisetzung von Kupfer in Lösung in reaktiver Form befähigt ist und aus Sulfaten, Nitraten, Chloriden, Oxalaten, metallorganischen Komplexen von Kupfer und Mischungen davon ausgewählt ist, unter Rühren bei Umgebungstemperatur über einen Zeitraum zwischen 1 h und 2 d, vorteilhafterweise über einen Zeitraum zwischen 0,5 und 1,5 d.

10. Kupferhaltiges SAPO-Material vom AFX-Strukturtyp, erhalten durch das Verfahren nach einem der Ansprüche 1 bis 9.

11. Verwendung des gemäß einem der Ansprüche 1 bis 9 hergestellten kupferhaltigen SAPO-Materials vom AFX-Strukturtyp zur selektiven Reduktion von NOₓ durch ein Reduktionsmittel wie NH₃ oder H₂.

12. Verwendung nach dem vorhergehenden Anspruch, wobei das Material durch Abscheiden in Form einer Beschichtung auf einer Wabenstruktur geformt wird.

13. Verwendung nach dem vorhergehenden Anspruch, wobei die Beschichtung das Material in Kombination mit einem Bindemittel wie Ceroxid, Zirconiumoxid, Aluminiumoxid, nichtzeolithischem Siliciumdioxid-Aluminiumoxid, Titanoxid, einem Ceroxid-Zirconiumdioxid-Mischoxid oder einem Wolframoxid umfasst.

14. Verwendung nach einem der Ansprüche 12 bis 13, wobei die mit dem Material beschichtete Struktur in eine Abgasleitung eines Motors mit innerer Verbrennung integriert ist.

## Claims

1. Process for preparing a copper-comprising SAPO material with AFX structure, comprising at least the following steps:
a) mixing, in an aqueous medium, of at least one aluminium source, at least one silicon source, at least one copper source, at least one phosphorus source, a complexing agent triethylenetetramine TETA, and a structuring agent N,N,N'-N'-tetramethylhexane-1,6-diamine TMHD, in order to obtain a gel having the molar composition:
*a* SiO₂ : *b* Al₂O₃ : c P₂O₅ : d TMHD : e CuSO₄ : f TETA : g H₂O a/c being between 0.1 and 1, b/c being between 0.1 and 1, g/c being between 1 and 100, d/c being between 0.5 and 4, e/c being between 0.005 and 0.1 and f/e being between 1 and 1.5;
b) hydrothermal treatment of said gel at a temperature of between 170 and 220°C, under an autogenous reaction pressure, for a period of between 1 and 3 days with a shear rate of less than 50 s⁻¹ in order to obtain the crystallization of said copper-comprising SAPO material with AFX structure.

2. Process according to the preceding claim, in which said step b) is carried out at a temperature of between 190 and 210°C.

3. Process according to either of the preceding claims, in which said step b) is carried out for a period of between 1 and 2 days.

4. Process according to one of the preceding claims, in which said step b) is carried out in the absence of stirring.

5. Process according to one of Claims 1 to 3, in which said step b) is carried out with a shear rate of between 0.1 and 50 s⁻¹.

6. Process according to one of the preceding claims, comprising a heat treatment step c) carried out at the end of step b), comprising a treatment under dry inert gas, at a temperature of between 400 and 600°C, for a period of between 5 and 15 h, followed by a combustion treatment in dry air, at a temperature of between 400 and 600°C, for a period of between 5 and 15 h.

7. Process according to the preceding claim, in which the dry air flow rate of said combustion treatment is between 0.5 and 1.5 1/h/g of solid to be treated.

8. Process according to one of Claims 1 to 6, comprising an ion exchange step which comprises bringing the solid obtained at the end of step b) into contact with a solution comprising a species capable of releasing copper in solution in reactive form chosen from sulfates, nitrates, chlorides, oxalates, organometallic complexes of copper and mixtures thereof with stirring at ambient temperature for a period of between 1h and 2 d, advantageously for a period of between 0.5 and 1.5 d.

9. Process according to either of Claims 6 and 7, comprising an ion exchange step which comprises bringing the solid obtained at the end of step c) into contact with a solution comprising a species capable of releasing copper in solution in reactive form chosen from sulfates, nitrates, chlorides, oxalates, organometallic complexes of copper and mixtures thereof with stirring at ambient temperature for a period of between 1h and 2 d, advantageously for a period of between 0.5 and 1.5 d.

10. Copper-comprising SAPO material with AFX structure obtained by the process according to one of Claims 1 to 9.

11. Use of the copper-comprising SAPO material with AFX structure prepared according to one of Claims 1 to 9, for the selective reduction of NOₓ by a reducing agent such as NH₃ or H₂.

12. Use according to the preceding claim, in which said material is formed by deposition in the form of a coating on a honeycomb structure.

13. Use according to the preceding claim, in which said coating comprises said material in combination with a binder such as ceria, zirconium oxide, alumina, non-zeolite silica-alumina, titanium oxide, a ceria-zirconia mixed oxide, or a tungsten oxide.

14. Use according to either of Claims 12 and 13, in which said structure coated with said material is integrated in an exhaust line of an internal combustion engine.
